# EUROPEAN PATENT APPLICATION

(11) **EP 3 575 017 A1**
(43) Date of publication of application: **04.12.2019**
(21) Application number: 18175092.8
(22) Date of filing: 30.05.2018
(51) Int. Cl.: B22F 3/105, B22F 3/24, B33Y 10/00, B33Y 30/00, B33Y 50/02, B22F 5/00, B22F 5/04

(54) **ADDITIVE MANUFACTURING PROCEDURE AND SETUP**

(71) Applicant: Siemens Aktiengesellschaft, 80333 München (DE)
(72) Inventor: Ott, Michael, 45470 Mülheim an der Ruhr (DE)

(57) **Abstract**

An additive manufacturing procedure is provided, the procedure comprising the following steps:
- a) providing an irradiation module (IM) and a first build module (1BM) with a first build platform, and a second build module (2BM) with a second build platform, wherein the first build module (1BM) is separate from the second build module (1BM) and the irradiation module (IM),
- b) depositing a first layer (L) of a powder (P) for a first component (10) on the first build platform in the first build module (1BM),
- c) connecting the first build module (1BM) to the irradiation module (IM) and selectively exposing the first layer (L) to an energy beam (21) of the irradiation module, for the additive manufacture of the first component (10),
- d) disconnecting the first build module (1BM) from the irradiation module (IM),
- e) during one of steps b), c) and d) depositing a first layer (L) of a powder for a second component (10) on the second build platform in the second build module (2BM), and
- f) connecting the second build module (2BM) to the irradiation module (IM) and selectively exposing the first layer (L) to the energy beam (21) for the additive manufacture of the second component (10). Further, a corresponding setup as well as an according build module are presented. Moreover, a corresponding setup and the build module as described above, are presented.

## Description

An additive manufacturing procedure or process chain is presented. Moreover, a setup or hardware, preferably a manufacturing arrangement for the powder-bed-based processes or manufacture of components by powder bed fusion (PBF), is presented.

The components to be manufactured by the mentioned techniques, preferably, pertain to components applied in a turbo machine, e.g. in the flow path hardware of a gas turbine. Thus, the component is, preferably, made of a superalloy or nickel-based alloy, particularly a precipitation-hardened alloy.

Additive or generative manufacturing techniques comprise e.g. powder bed methods, such as selective laser melting (SLM), selective laser sintering (SLS) or electron beam melting (EBM) .

A method of selective laser melting is described in EP 2 601 006 B1, for example.

Additive manufacturing (AM) methods have proven to be useful and advantageous in the fabrication of prototypes or complex and filigree components, such as lightweight design or cooled components comprising mazelike internal structures. Further, additive manufacture stands out for its short chain of process steps, as a manufacturing step can be carried out based on corresponding CAD file.

Conventional apparatuses or setups for the given powder bed manufacturing methods usually comprise a manufacturing or build platform on which the component is built layer-by-layer after the feeding of a layer of base material which may then be melted, e.g. by the energy of a laser beam and subsequently solidified. The layer thickness is determined by a recoater or deposition apparatus that moves, e.g. automatically, over the powder bed and removes excess material. Typical layer thicknesses amount to 20 µm or 40 µm. During the manufacture, said laser beam scans over the surface and melts the powder on selected areas which may be predetermined by the CAD-file according to the geometry of the component to be manufactured.

State of the art SLM equipment for the manufacture of the given, particularly metallic, components e.g. integrate the irradiation or exposure unit, and preferably comprising an energy beam source, such as a laser, and a recoating or deposition unit in a single build chamber, or at least in a single device. As a consequence, a recoating step in which a new layer of a base material powder is deposited on the manufacturing plane, cannot be carried out simultaneously with the actual irradiation or selective exposure of the layer for its solidification. It is well-known that said deposition or recoating has to be repeated for every layer to be deposited for the component. Said recoating is, thus, inefficient or requires lots of non-productive time in the whole manufacturing process. Due to the mentioned small layer thicknesses of every single layer, it is apparent, that the recoating time needed for the manufacture of the whole component is significant, inefficient and responsible for the expensive and time-consuming manufacturing route. It is known that the number of layers to be deposited for a component, depending on its material and geometry, may easily amount to thousands or even tens of thousands of layers.

In view of the ever increasing importance of digitalisation trends and of the Internet of things it is expected that additive manufacturing solutions also gain significance. Thus, there is the need to fully apply additive manufacturing in industrial processes and, consequently, to carry out such manufactures more rapidly.

It is, thus, an object of the present invention to provide means which solve the mentioned problems, particularly which overcome the difficulties in the time-consuming additive manufacturing and improve the industrialization of additive manufacturing in general.

The mentioned object is achieved by the subject-matters of the independent claims. Advantageous embodiments are subject-matter of the dependent claims.

An aspect of the present invention relates to an additive manufacturing procedure, method or process, comprising providing an irradiation or exposure module and a first build module with the first build platform and a second build module with a second build platform, wherein the first build module is separate from the second build module and the irradiation module.

The irradiation module preferably comprises a laser or electron beam source for the selective exposure or irradiation of a layer of base material for the component.

The first build module and the second build module preferably each constitute part, which are - during an irradiation step - preferably exposed to or interfering with the energy beam in order to solidify a powder according to the geometry of the respective component.

In an embodiment, a further build module, such as the third build module and a fourth build module, are provided.

In an embodiment, a plurality or multiplicity of build modules are provided. The plurality or large number of build modules, preferably, allows the procedure to be carried out in an increasingly efficient way in terms of the off-time of the energy source. In other words, the more loops or build platforms are embedded in the procedure, the less significant is the laser off-time per build job. Said off-time may relate to the time the energy source or energy beam is switched off during the (conventional) manufacture of the component due to additionally required method steps, such as pre- or post-heat -treatment, or mechanical post-processing steps, such as machining or hot-isostatic-pressing, for example.

The term "separate" preferably means a physically separated, releasable or mutually moveable arrangement and configuration of the provided build modules, including the first build module and the second build module, and the irradiation module. In other words, the mentioned build modules, carrying preferably the respective build platforms, and the irradiation module are preferably movable with respect to each other without any required physical relationship or link. Said modules may e.g. be arranged in different locations. Preferably, they are not necessarily enclosed by a subordinate housing or similar means, e.g. housing in which a manufacturing vacuum can be maintained.

The first build module and the second build module, and preferably further provided build modules are, preferably, of similar type and configuration. This shall mean, that the build modules can be exchangeably used for similar purposes and may be identical.

In an embodiment the first build module, the second build module and preferably also further applicable build modules may be configured as a container, respectively.

The procedure further comprises depositing or recoating a first layer of a, preferably metallic, powder, such as a powdery or granular base material, for a first component on the first build platform and in the first build module. Therewith, preferably a first build job of the first component is described.

The procedure further comprises, preferably mechanically, connecting the first build module to the irradiation module and selectively exposing the first layer for the first component to an energy beam of the irradiation module, for the additive manufacture of the first component. Said exposure or irradiation is preferably carried out according to the predefined geometry of a CAD file of the first component.

The term "connecting" or the corresponding connection of the build module e.g. to the irradiation module or any further module mentioned herein, may particularly as well imply a sealing of the respective build module - or the component it contains - against an ambient air or environment.

The procedure further comprises disconnecting the first build module from the irradiation module.

The procedure further comprises - during the described steps of the depositing, connecting and/or disconnecting - depositing or recoating of a first layer of the powder for the second component on the second build platform and in the second build module. This is preferably carried out analogue to the depositing of the first layer for the first component.

The procedure further comprises connecting the second build module to the irradiation module and selectively exposing the first layer to the energy beam for the additive manufacture of the second component.

By the presented procedure, a continuous production cycle for AM components is provided which significantly improves industrialisation of powder bed fusion methods, as the beam off-time can be reduced significantly as compared to state-of-the-art approaches. Consequently, the procedure potentially also reduce manufacturing costs.

By the provision of a plurality of build modules, i.e. at least two build modules and preferably three, four or five or even ten or twenty, up to fifty build modules, an assembly line for AM components may be provided with e.g. only one or a very low number energy source(s). Further necessary or required manufacturing steps, such as the described recoating, preheating, post heating, post-processing of further steps may be carried out separate from the actual irradiation of the powder. Thus, a tailored heating of a base material for the component and/or an as-manufactured layer thereof can be embedded in the procedure without expending unproductive time (e.g. laser off-time) as mentioned above.

Still further, even a quality assurance of single manufactured layers may be carried out in a time-effective way. Moreover, it is enabled, to waste or scrap a defective build job from the whole process chain in an early stage of the respective build job. At the same time, the procedure of parallel build jobs can be continued without interruption.

In an embodiment the first and/or the second build module are arranged in or connected to a quality assurance module, wherein - in turn - a solidification result, such as a structural or dimensional quality or integrity, of the first layer is evaluated. Said assurance or evaluation may be of particular interest, as e.g. a detection of any structural defects in an early growth stage of the component allows for an early scrap thereof, machining of the component or cancellation of the respective build job.

In an embodiment, if a quality parameter, e.g. evaluated in the quality assurance module, lies within an acceptable range, the procedure comprises depositing or recoating a second (subsequent) layer of the powder for the first and/or the second component in the respective build module. Said second layer is preferably deposited or recoated analogue to the first layer as described above, i.e. on the respective build platform.

In an embodiment, if the quality parameter lies out of the acceptable range, the procedure comprises scrapping the buildup for the first and/of the second component, i.e. the layers of said build job which are already manufactured, solidified or assembled.

In an embodiment, the additive buildup process for the manufacture of the first and/of the second component is a powder bed fusion method, such as selective laser melting or electron beam melting.

In an embodiment, wherein the first build module and/or the second build module is similar and each configured as a sealable box or container. Said sealing is particularly advantageous in order to protect the buildup against an ambient impact, such as oxidation or corrosion.

In an embodiment, said box is filled or fillable with an inert gas prior to the disconnecting of the respective build module from the irradiation module in order to protect the respective as-manufactured layer against the environment as described.

In an embodiment a pre-heating of the deposited layer is carried out between the depositing and the connecting of the respective build module, e.g. in a pre-heating module. The preheating module is preferably also configured and arranged separate from the remaining modules as described above.

In an embodiment a post-heating of the deposited layer is carried out after the disconnecting of the respective build module, e.g. in a post-heating module. The post-heating module is preferably also configured and arranged separate from the remaining modules as described above.

In an embodiment, the second build module is disconnected from the irradiation module after the selective exposure of the first layer for the second component.

In an embodiment - e.g. during one of the steps of the depositing of the first layer for the second component, the connecting and the previously mentioned disconnecting of the second build module from the irradiation module - the procedure comprises depositing a first powder layer of the powder for a further (and still different component) on a further build platform and in a further build module. Said further build module is preferably of the same type as the first and/of the second build module, as mentioned above.

In an embodiment, said procedure then, further comprises connecting the further build module to the irradiation module and selectively exposing the first layer for the further component to the energy beam for the additive manufacture of that further component.

In the given manner, said procedure may include the addition of further build modules with build platforms for the manufacture of still further components.

In an embodiment, the procedure comprises - after the final manufacture of e.g. one of the mentioned components - the removal of excess powder from that component, e.g. by mechanical means and/or an optional post-processing of that component or its surfaces.

A further aspect of the present invention relates to a setup, such as an additive manufacturing setup or arrangement, preferably an arrangement for powder bed fusion, being configured to carry out the steps of the procedure as described above.

Said setup preferably comprises the first build module, the second build module and, optionally, a further build module. In addition, said setup may include still a further build module is (cf. above).

The setup further comprises a deposition module being configured to coat a manufacturing plane of one of the build modules with a new powder layer.

The setup further comprises the irradiation module, i.e. preferably a single irradiation module, comprising an energy beam source and, e.g. a scanning optic, a shielding or purging gas inlet and a corresponding gas outlet.

In an embodiment, the setup further comprises at least one of the mentioned quality assurance module, preheating module, post-heating module and a depowdering module, the latter is, preferably, configured for the removal of excess powder, e.g. from an inside of the readily manufactured component. The setup may further comprise a post-processing module, being configured for any post-processing, such as machining, grinding, laser ablation or laser peening of e.g. a surface of the component.

A further aspect of the present invention relates to a build module as described by way of the presented procedure. Said build module is configured to be sealably and/or releasably connected to the irradiation module, the deposition module - preferably also for the further mentioned modules, and for the powder bed based additive manufacture of metallic turbine components from superalloys.

Advantages and embodiments relating to the described procedure may as well pertain to the setup, and vice versa.

Further features, expediencies and advantageous refinements become apparent from the following description of the exemplary embodiment in connection with the Figures.
- Figure 1: indicates, in a schematic view, an additive powder bed fusion process with a component shown during its additive manufacture.
- Figure 2: indicates, by way of an exemplary chart, procedural steps according to the present invention.
- Figure 3: illustrates, by way of another chart, the inventive procedure by way of two exemplary, procedural loops.
- Figure 4: indicates in a still further chart, a setup comprising a plurality of modules according to the present invention.

Like elements, elements of the same kind and identically acting elements may be provided with the same reference numerals in the figures.

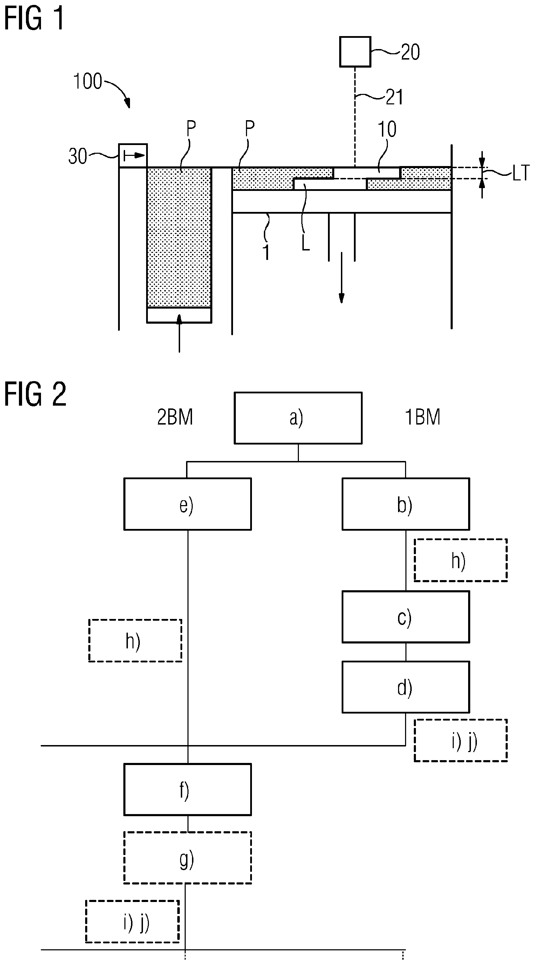

Figure 1 shows an additive manufacturing device 100. The device 100 may constitute a state of the art hardware for selective laser melting or electron beam melting. The device 100 may, thus, pertain to a powder bed fusion method. The device 100 comprises a build platform 1. On the build platform 1, a component 10 is, preferably, directly manufactured, i.e. welded. Preferably the component 10 is buildup in the device 100 out of a powder bed P. Said component or part 10 preferably relates to a turbine component, such as a component applied in the hot gas path of a gas turbine (not explicitly indicated).

Particularly, the component 10 may relate to a blade, vane, shroud, shield, such as heat shield, tip, segment, insert, injector, seal, transition, burner, nozzle, strainer, orifice, liner, distributor, dome, boost, cone, lance, plate, resonator, piston or any corresponding retrofit.

In Figure 1, the component 10 is preferably depicted during its manufacture and only partly established. It is indicated that, after the deposition of a powder layer, e.g. with the aid of a deposition apparatus 30, an energy beam 21 is used to selectively melt the powder for the layerwise buildup of the component 10. A layer thickness of the layer may amount to LT, as indicated on the right in Figure 1.

Said energy beam 21 is, preferably, emitted from an irradiation apparatus 20, such as an electron beam or laser source. After the local melting due to the energy beam 21, the material expediently solidifies in the final structure for the component 10.

After a layer has been manufactured, the platform 1 is preferably lowered by a distance corresponding to the layer thickness LT. Further, the deposition apparatus 30 preferably distributes a further powder layer which may be moved from a stock or supply (not explicitly numerically indicated) of the respective powdery base material P as shown in the left of Figure 1.

Figure 2 indicates schematically a procedure according to the present invention by way of a flowchart sequence. On the right side of Figure 2, procedural steps including a first build module 1BM is shown. On the left side, procedural steps including a second build module 2BM are opposed in the flow chart.

Procedural step a) indicates providing an irradiation module IM and a first build module 1BM with a first build platform, and a second build module 2BM with a second build platform, wherein the first build module 1BM is separate from the second build module 1BM and the irradiation module IM.

Step b) indicates depositing a first layer L of a powder P for a first component 10 on the first build platform in the first build module 1BM.

Step c) indicates connecting the first build module 1BM to the irradiation module IM and selectively exposing the first layer L to an energy beam 21 of the irradiation module IM, for the additive manufacture of the first component 10.

As the components mentioned herein may be all of the same type, only one reference numeral is used for each of the components.

Step d) indicates disconnecting the first build module 1BM from the irradiation module IM.

Step e) indicates during one of steps b), c) and d) depositing a first layer L of a powder for a second component 10 on the second build platform in the second build module 2BM.

Further, step f) indicates connecting the second build module 2BM to the irradiation module IM and selectively exposing the first layer L to the energy beam 21 for the additive manufacture of the second component 10, analogous to step c).

Preferably, the first build module 1BM and/or the second build module 2BM are similar and each configured as a sealable box, and wherein said box is - at least during an exposure with the energy beam - filled or fillable with an inert gas, such as argon or nitrogen e.g. prior to the disconnecting from the irradiation module IM in order to protect an as-manufactured layer from an environment.

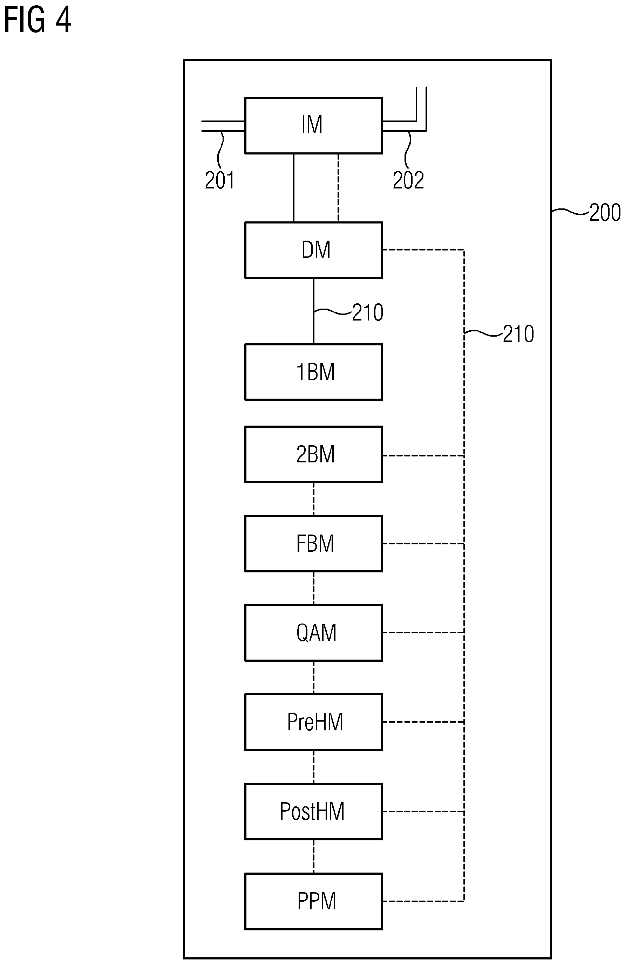

Between step b) and c), the procedure may comprise a pre-heating h) of the as-deposited layer P, e.g. in a pre-heating module (cf. PreHM in Figure 4).

After step d), the procedure preferably comprises post-heating i) of the as-manufactured layer L, e.g. in a post-heating module (cf. PostHM in Figure 4).

Step g) preferably indicates that the second build module 2BM is disconnected from the irradiation module IM after step f) and - e.g. during one of steps e), f) and g) depositing a first layer L of a powder for a further component 10 on a further build platform in a further build module FBM, and the second build module 2BM is connected to the irradiation module IM, wherein the first layer L is selectively exposed to the energy beam 21 for the additive manufacture of the further component 10.

Although this is not explicitly indicated in Figure 2, the procedure may comprise - after the final manufacture of one of the components 10 - a removal of excess powder P from an inside of said component and/or optional post-processing of surfaces of said component.

The contours of the boxes of the flowchart in Figure 2 indicate that the respective steps are optional and not necessarily required for the presented procedure.

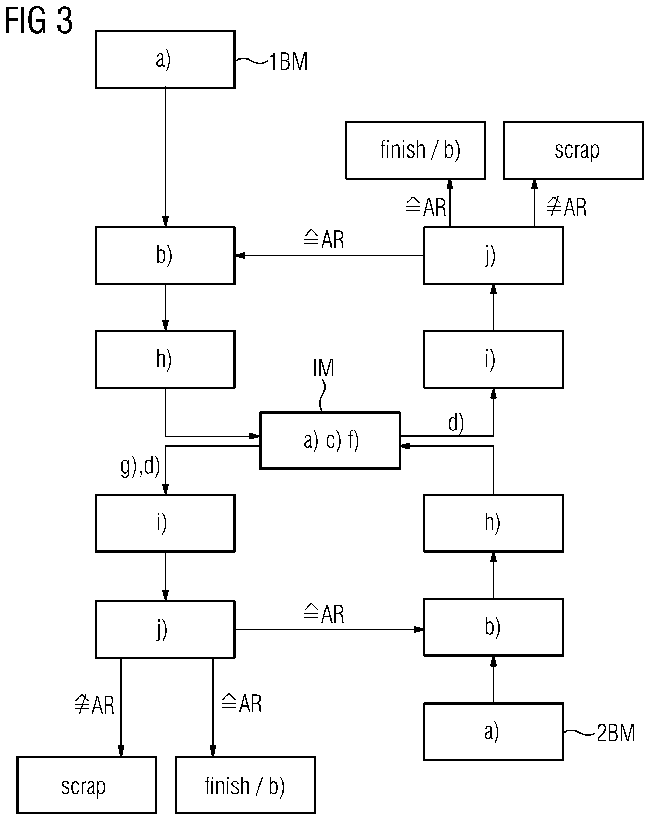

Figure 3 indicates the inventive procedure in an alternative way, namely similar to Figure 2, by way of two exemplary procedural loops, wherein each loop indicates a single build job or manufacturing procedure.

In the upper part of Figure 3, a first loop indicating a processing including the first build module is shown.

In the lower part of Figure 3, a second loop indicating a processing including the second build module is shown.

Even though this is not explicitly indicated said procedure may as well comprise further loops, e.g. a loop of the further, third, fourth or other build module FBM (cf. above).

The loop of the first build module 1BM may start again with step a) in the top part of Figure 3. Further, the irradiation module IM and the second build module 2BM (see lower part of the second loop at the bottom of Figure 3) are provided.

Then, in a counterclockwise sense, step b), optionally step h), step c), step d) (disconnecting), optionally step i) and, subsequently, optionally, j) are indicated. In the latter process step, the quality of the as-manufactured layer maybe inspected (cf. Figure 4 below). When e.g. a quality turned out to be sufficient and a quality parameter lies within an acceptable range AR, then said build platform may be recoated with a new layer in order to further build up the component (not explicitly indicated). This is indicated by the arrow in the top view of Figure 3 directing to the left i.e. towards step b). Analogue, the second loop including the second build module may be embedded in the procedure.

For instance, the mentioned build modules (cf. 1BM, 2BM) may be embedded or integrated in the procedure via an assembly line and/or a horizontal rotating table being equipped with the different build modules, wherein only one build module at a time is preferably connected of fed into the irradiation module IM.

By the given means, it is facilitated, that a plurality of build jobs may alternatingly or sequentially be connected to the irradiation module IM for the selective exposure of the newly deposited powder layer L. Therewith, a laser off-time may be reduced significantly and a plurality of components may be manufactured almost simultaneously which means significant advances for the industrialisation of powder bed fusion processes.

Figure 3 further illustrates that the first and/or the second build module 1BM, 2MB may be arranged in a quality assurance module (cf. QM in figure 4). In the quality assurance module QM e.g. a solidification result of the first layer L is evaluated, i.e. preferably a structural or dimensional quality or integrity. If for example a predefined quality parameter lies within an acceptable range AR, the given procedure comprises may comprise depositing a second layer L of the powder for the first and/or the second component 10 in the respective build module 1BM, 2BM. Alternatively, the component 10 may be completed, its manufacture finished and/or the component 10 may be separated from the procedure or post-processed.

When, in turn, said parameter lies out of the acceptable range, given procedure may comprise scrapping the buildup for the first and/or the second component 10.

Said quality assurance means may comprise optical or thermographical microscopy or camera identification, laser scanning for evaluating the dimensional accuracy, or even computed tomography of further non-destructive testing, examination or inspection techniques.

Figure 4 shows a setup 200. The Setup 200 being configured to carry out the steps as described above, namely steps a) to j), and possibly further steps.

The setup 200 comprises a first build module 1BM with a first build platform (not explicitly indicated).

The setup 200 further comprises a second build module 2BM with a second build platform (not explicitly indicated)

The second build module 2BM is preferably of the same type as the first build module 1BM and analogously arranged and configured.

The setup 200 preferably further comprises one or more further build module 1BM with a further build platform (as well not explicitly indicated) each. Preferably, the setup 200 comprises 3, 4, 5 or even 10 build module to in total. Alternatively, said setup may comprise 20, 50 or even 100 build module is of the same type and configuration as the ones described above.

The setup 200 further comprises a deposition module DM being configured to coat a new powder layer L on a manufacturing plane (not explicitly indicated) of one of the described build modules.

The setup 200 further comprises an irradiation module IM comprising an energy beam source with a shielding gas inlet 201 and a shielding gas outlet 202.

In the setup 200 preferably further comprises one or more of a quality assurance module QM, a pre-heating module PreHM, a post heating module PostHM and a post-processing module PPM, for post-manufacture processing or machining of e.g. surfaces for one of the components, or any type of grinding, laser ablation or laser peening.

The setup may further comprise a depowdering module for the removal of excess powder e.g. from an inner space or a cavity of the respective component. Each of these modules may constitute processing modules.

Each of the build modules 1BM, 2BM, FBM is configured to be sealably and/or releasably connected to the irradiation module IM, the deposition model DM and the optional further moduls as described above via a releasable and sealable connection 210. The irradiation module may as well be a processing module. The dashed lines in Figure 4 particularly indicate the possibility to sealably and/or releasably connect one of the respective build modules to each of the different processing modules.

The scope of protection of the invention is not limited to the examples given hereinabove. The invention is embodied in each novel characteristic and each combination of characteristics, which particularly includes every combination of any features which are stated in the claims, even if this feature or this combination of features is not explicitly stated in the claims or in the examples.

## Claims

1. Additive manufacturing procedure comprising the following steps:
- a) providing an irradiation module (IM) and a first build module (1BM) with a first build platform, and a second build module (2BM) with a second build platform, wherein the first build module (1BM) is separate from the second build module (1BM) and the irradiation module (IM),
- b) depositing a first layer (L) of a powder (P) for a first component (10) on the first build platform in the first build module (1BM),
- c) connecting the first build module (1BM) to the irradiation module (IM) and selectively exposing the first layer (L) to an energy beam (21) of the irradiation module, for the additive manufacture of the first component (10),
- d) disconnecting the first build module (1BM) from the irradiation module (IM),
- e) during one of steps b), c) and d) depositing a first layer (L) of a powder for a second component (10) on the second build platform in the second build module (2BM), and
- f) connecting the second build module (2BM) to the irradiation module (IM) and selectively exposing the first layer (L) to the energy beam (21) for the additive manufacture of the second component (10).

2. Procedure according to claim 1, wherein the first and/or the second build module (1BM, 2MB) are arranged in a quality assurance module (QAM), wherein - in turn - a solidification result of the first layer (L) is evaluated.

3. Procedure according to claim 2, wherein - if a quality parameter lies within an acceptable range -depositing a second layer (L) of the powder for the first and/or the second component (10) in the respective build module (1BM, 2BM) .

4. Procedure according to claim 2, wherein - if the quality parameter lies out of the acceptable range - scrapping the buildup for the first and/or the second component (10).

5. Procedure according to one of the previous claims, wherein the additive buildup process for the manufacture of the first and/or the second component is a powder-bed-fusion method, such as selective laser melting or electron beam melting.

6. Procedure according to one of the previous claims, wherein the first build module (1BM) and/or the second build module (2BM) are similar and each configured as a sealable box, and wherein said box is filled with an inert gas e.g. prior to the disconnecting from the irradiation module (IM) in order to protect an as-manufactured layer from an environment.

7. Procedure according to one of the previous claims, wherein between step b) and c) a pre-heating h) of the as-deposited layer (P) is carried out, e.g. a pre-heating module (PreHM).

8. Procedure according to one of the previous claims, wherein after step d), a post-heating i) of the as-manufactured layer (L) is carried out, e.g. in a post-heating module (PostHM).

9. Procedure according to one of the previous claims, wherein the second build module (2BM) is, g), disconnected from the irradiation module (IM) after step f) and - e.g. during one of steps e), f) and g) depositing a first layer (L) of a powder for a further component (10) on a further build platform in a further build module (FBM), and connecting the further build module (FBM) to the irradiation module (IM) and selectively exposing the first layer (L) to the energy beam (21) for the additive manufacture of the further component.

10. Procedure according to one of the previous claims comprising - after the final manufacture of one of the components (10) - a removal of excess powder (P) from said component and/or optional post-processing of surfaces of said component.

11. Setup (200) being configured to carry out the steps of one of the previous claims, said setup (200) further comprising:
- a first build module (1BM) with a first build platform, and
- a second build module (2BM) with a second build platform, the second build module (2BM) being of the same type as the first build module (1BM),
- a depositing module (DM), and
- an irradiation module (IM) comprising an energy beam source with a shielding gas inlet (201) and a shielding gas outlet (202), wherein each build module (1BM, 2BM) is configured to be sealably and/or releasably connected to the irradiation module (IM).

12. Setup (200) according to of one of the previous claims further comprising at least one of:
- a quality assurance module (QM),
- a pre-heating module (PreHM),
- a post-heating module (PostHM), and
- post-processing module (PPM), for post-manufacture processing of e.g. surfaces for one of the components.

13. Build module (1BM, 2BM, FBM) according to of one of the previous claims, being configured to be sealably and/or releasably connected to the depositing module (DM) and the irradiation module (IM) for the powder bed based additive manufacture of metallic turbine components from superalloys.
